Europäisches Patentamt

European Patent Office

Office européen des brevets

(19)

(11) **EP 1 126 671 A1**

(12) **EUROPÄISCHE PATENTANMELDUNG**

(43) Veröffentlichungstag:
**22.08.2001 Patentblatt 2001/34**

(51) Int Cl.7: **H04L 25/03**

(21) Anmeldenummer: **00810126.3**

(22) Anmeldetag: **15.02.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **ABB RESEARCH LTD.**
**8050 Zürich (CH)**

(72) Erfinder: **Dzung, Dacfey**
**5430 Wettingen (CH)**

(74) Vertreter: **ABB Patent Attorneys**
**c/o ABB Business Services Ltd,**
**Intellectual Property (SLE-I),**
**Haselstrasse 16/699**
**5401 Baden (CH)**

(54) **Verfahren zum Entzerren und Demodulieren eines übertragenen Signals**

(57)     Um die Verzerrungen in einem empfangenen Datensignal (y(t)) zu beheben, wird das Signal digitalisiert, einem Entzerrer (5) zugeführt, und sodann demoduliert. Bei der Demodulation werden Signalanteile bei Frequenzen ausserhalb des eigentlichen Frequenzbands des Signals (y(t)) unterdrückt. Der Frequenzverlauf des Entzerrers wird nur innerhalb des Frequenzbands B der gewünschten Übertragungsfunktion angeglichen, während Abweichungen ausserhalb des Frequenzbands im wesentlichen ignoriert werden. Dadurch kann mit der gleichen Zahl von Entzerr-Parametern eine Entzerrung höherer Qualität erreicht werden.

Fig. 1

**EP 1 126 671 A1**

**Beschreibung**

Technisches Gebiet

Die Erfindung betrifft ein Verfahren zum Entzerren und Demodulieren eines über ein Übertragungsmedium übertragenen Signals gemäss Oberbegriff von Anspruch 1.

Stand der Technik

Um die Verzerrungen des Übertragungsmediums zu beheben, werden in derartigen Verfahren die empfangenen Daten in der Regel in einem Entzerrer bzw. Equalizer nach dem Bandpassfilter aufgearbeitet. Bekannte Lösungen sind jedoch rechentechnisch aufwendig oder liefern Entzerrungen ungenügender Qualität.

Darstellung der Erfindung

Es stellt sich deshalb die Aufgabe, ein Verfahren der eingangs genannten Art bereitzustellen, das mittels geeigneter Entzerrung eine möglichst einfache und dennoch qualitativ gute Aufbereitung des empfangenen Signals erlaubt.

Diese Aufgabe wird vom Verfahren gemäss Anspruch 1 gelöst.

Erfindungsgemäss wird also der Frequenzverlauf $H(f)$ des Entzerrers nur innerhalb des Frequenzbands B an die gewünschte Übertragungsfunktion $D(f)$ angeglichen, während Abweichungen ausserhalb des Frequenzbands B im wesentlichen ignoriert werden. Dabei ist B das vom Nutzsignal benutzte Frequenzband. Dadurch kann mit der gleichen Zahl von Parametern bzw. der gleichen Rechenleistung eine Entzerrung höherer Qualität erreicht werden.

Um die Abweichungen zwischen der gewünschten Übertragungsfunktion $D(f)$ und dem tatsächlichen Frequenzverlauf $H(f)$ zu quantifizieren, kann z.B. das Integral der quadrierten absoluten Differenz der beiden Funktionen über das Frequenzband B berechnet werden.

Die gewünschte Übertragungsfunktion entspricht vorzugsweise der inversen der Fouriertransformation der Impulsantwort, wobei die Fouriertransformation für eine sehr hohe Zahl von Punkten berechnet wird, um eine hohe Frequenzauflösung zu erhalten.

Die Koeffizienten der Entzerrung werden vorzugsweise im Frequenzraum berechnet. Dabei können Frequenzkoeffizienten innerhalb des Frequenzbandes B gleich der gewünschten Übertragungsfunktion gesetzt werden. Frequenzkoeffizienten weit ausserhalb des Frequenzbandes werden gleich 0 gesetzt. Nur die verbleibenden Frequenzkoeffizienten werden zur Anpassung des Frequenzverlaufs der Entzerrung zwischen den Stützpunkten in B verwendet. Auf diese Weise kann die Zahl der zu berechnenden Parameter deutlich reduziert werden.

Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:

Fig. 1 das Blockschaltbild einer Übertragungsstrecke mit Sender und Empfänger,
Fig. 2 ein Blockschaltbild einer Ausführung des Empfängers,
Fig. 3 Messwerte für Impulsantwort-Koeffizienten,
Fig. 4 die Kanal-Übertragungsfunktion (Absolutwert $|H_c(f)|$) der Impulsantwort von Fig. 3 im Frequenzraum,
Fig. 5 die Entzerr-Koeffizienten für die Impulsantwort gemäss Fig. 3 gemäss einem ersten, naiven Verfahren,
Fig. 6 den Entzerr-Frequenzverlauf $H(f)$, der den Entzerr-Koeffizienten von Fig. 5 entspricht, sowie die Funktion $1/H_c(f)$ (glattere Kurve),
Fig. 7 die Entzerr-Koeffizienten für die Impulsantwort gemäss Fig. 3 berechnet nach einer Ausführung des erfindungsgemässen Verfahrens, und
Fig. 8 den Entzerr-Frequenzverlauf $H(f)$, der den Entzerr-Koeffizienten von Fig. 6 entspricht, sowie die Funktion $D(f)$ (glattere Kurve).

Weg zur Ausführung der Erfindung

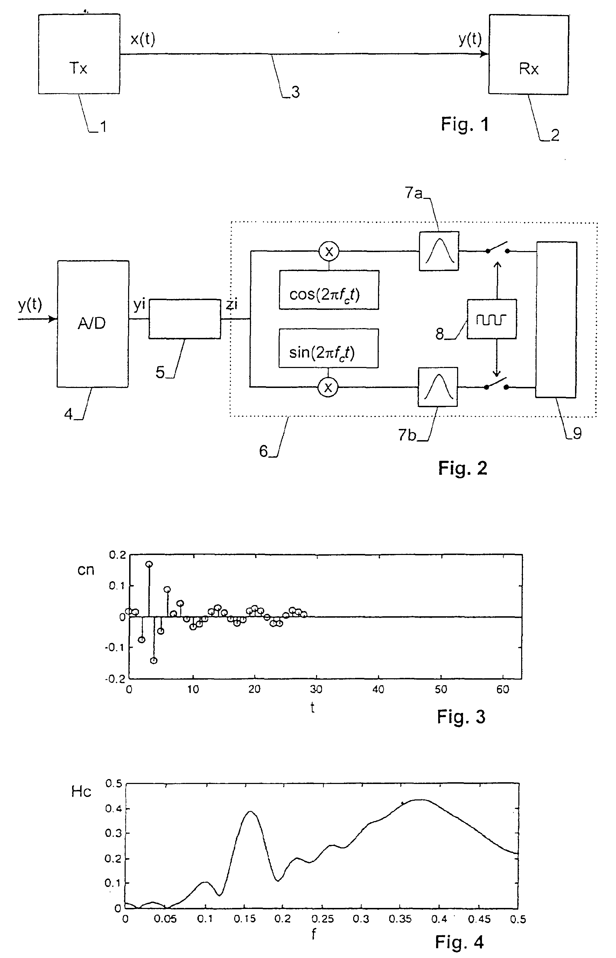

Fig. 1 zeigt die Situation, wo ein Sender 1 ein Signal x(t) erzeugt und an einen Empfänger 2 schickt. Im Übertragungsmedium 3 zwischen Sender 1 und Empfänger 2 wird das Signal x(t) verzerrt, so dass der Empfänger ein Signal

$$y(t) = h_c * x(t) + n(t) \qquad (1)$$

empfängt, wobei $h_c(t)$ die Impulsantwort des Übertragungsmediums ist, * die Faltung kennzeichnet, und $n(t)$ dem additiven Rauschen entspricht.

Für die folgende Beschreibung wird angenommen, dass das Signal x ein Trägersignal ist, welches digital moduliert wurde mit einer Bit- bzw. Symbolrate $1/T_{symb}$, d.h. $T_{symb}$ ist die Länge eines Symbols bzw. Bits im Datenstrom. Die Trägerfrequenz des Trägersignals sei $f_c$.

Fig. 2 zeigt Blockschaltbild eines Empfängers für das Signal y. Er besitzt einen Analog-Digital-Wandler 4, eine Entzerrstufe 5 und einen Demodulator 6. Auf den Aufbau und die Aufgabe der Entzerrstufe 5 wird weiter unten eingegangen. Die einzelnen Teile des Empfängers können in Hard- oder Software implementiert sein.

Im Demodulator 6 wird das Signal in bekannter Weise mit $\cos(2\pi f_c t)$ und $\sin(2\pi f_c t)$ multipliziert. Die Resultate werden durch einen Tiefpass 7a, 7b geführt, dessen Bandbreite der Breite des Frequenzbandes B des Signals x entspricht. B ist im wesentlichen auch das (tatsächlich genutzte) Frequenzband des empfangenen Signals $y$. Die Multiplikation mit $\cos(2\pi f_c t)$ und $\sin(2\pi f_c t)$ und die Filterung in den Filtern 7a, 7b führt zu einer Unterdrückung der Frequenzanteile des entzerrten Signals ausserhalb des Frequenzbands B.

In einer Synchronisationsschaltung 8 mit Abtastperiode $T_{symb}$ werden die Signale synchronisiert und sodann einem Bit-Detektor 9 ("slicer") zugeführt.

Die Entzerrstufe 5 ist vor dem Demodulator angeordnet und arbeitet also direkt mit dem (digitalisierten) Eingangssignal $y(t)$, d.h. mit den digitalisierten Werten $y_i$, deren Rate der Abtastrate $1/T$ des A/D-Konverters 4 entspricht. Aufgrund des Abtasttheorems muss diese Rate hoch sein, nämlich $1/T > 2f_c$. Insbesondere ist die Abtastrate $1/T$ sehr viel höher als die Symbolrate $1/T_{symb}$.

Die Entzerrstufe 5 umfasst ein digitales Filter, dessen Aufgabe es ist, die im Übertragungsmedium 3 erzeugten Verzerrungen möglichst weitgehend rückgängig zu machen. Das Filter erzeugt gefilterte Ausgangswerte $z_i$ gemäss

$$z_i = \sum_{k=0}^{N-1} y_{i-k} h_k \ , \qquad (2)$$

wobei $h_0 \ldots h_{N-1}$ die Entzerr-Koeffizienten sind. Eine typische Grösse von $N$ ist z.B. 64.

Im Frequenzraum entspricht Gleichung (2) einem Entzerr-Frequenzverlauf

$$H(f) = \sum_{n=0}^{N-1} h_n e^{-j2\pi f n T} \ . \qquad (4)$$

Im folgenden wird beschrieben, wie die Koeffizienten $h_i$ (und somit der Entzerr-Frequenzverlauf) $H(f)$ zu wählen sind, um eine möglichst gute Entzerrung zu erreichen.

In einem ersten Schritt wird die Impulsantwort $h_c(t)$ des Übertragungsmediums mit der Messrate $1/T$ gemessen. Dies ergibt die Impulsantwort-Koeffizienten $c_0$, $c_1$, $c_2$, ... Eine entsprechende Messung ist in Fig. 3 dargestellt. Aus diesen Koeffizienten kann die Kanal-Übertragungsfunktion $H_c(f)$ im Frequenzraum mittels Fouriertransformation ermittelt werden:

$$H_c(f) = \sum_{n=0}^{\infty} c_n e^{-j2\pi f n T} \ . \qquad (5)$$

Die zu den Messwerten von Fig. 3 gehörige Kanal-Übertragungsfunktion $H_c(f)$ ist in Fig. 4 dargestellt.

In einer einfachsten Ausführung könnte nun der Entzerr-Frequenzverlauf $H(f)$ des Entzerrers gewählt werden als

$$H(f) = \frac{1}{H_c(f)}. \tag{6}$$

In diesem Falle wäre im Frequenzraum das Ausgangssignal der Entzerrstufe 5 gleich

$$Y(f)H(f) = \left(H_C(f)X(f) + N(f)\right)H(f) \approx X(f). \tag{7}$$

Um das entsprechende Verfahren zu realisieren, könnte wie folgt vorgegangen werden: Zuerst werden aus den gemessenen (zeitlich abgeschnittenen) Impulsantwort-Koeffizienten $c_0$, $c_1$, ... $c_{L-1}$ und Gleichung (5) die $N$ Kanal-Frequenzkoeffizienten $H_{c,k} = H_c(k/NT)$ berechnet. Sodann werden Entzerr-Frequenzkoeffizienten $H_k = 1/H_{c,k}$ bestimmt, und die $N$ Entzerr-Koeffizienten $h_k$ werden aus den Entzerr-Frequenzkoeffizienten $H_k$ mittels diskreter inverser Fouriertransformation über $N$ Punkte ermittelt.

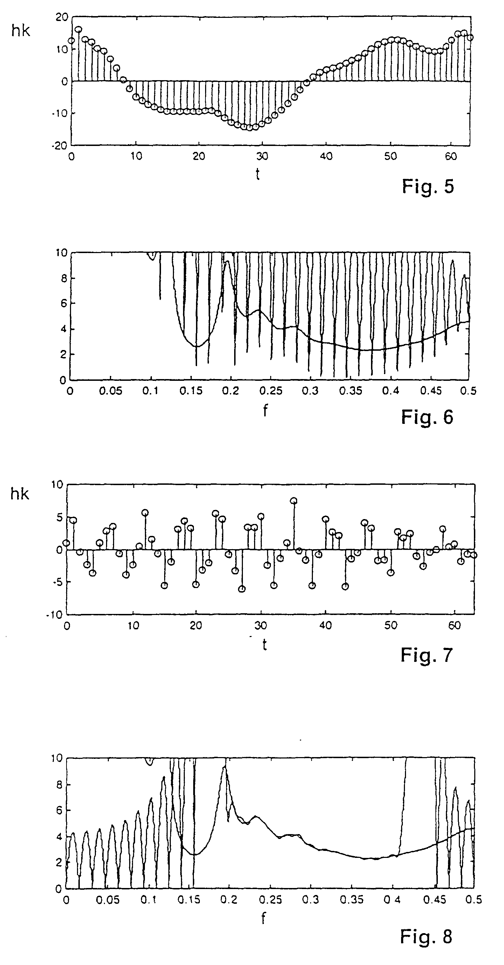

Fig. 5 zeigt die aus diesem Verfahren ermittelten Entzerr-Koeffizienten $h_k$ für die Daten gemäss Beispiel von Fig. 3 und 4. Fig. 6 zeigt den Entzerr-Frequenzverlauf $H(f)$, der den Entzerr-Koeffizienten von Fig. 5 spricht, sowie die Funktion $1/H_C(f)$. Wie daraus ersichtlich, zeigt der Entzerr-Frequenzverlauf $H(f)$ starke Abweichungen vom gewünschten Verlauf $1/H_c(f)$.

Deshalb wird erfindungsgemäss eine modifizierte Vorgehensweise gewählt. Dieser steht der Gedanke zu Grunde, dass die Beziehung gemäss Gleichung (6) nicht über alle Frequenzen erfüllt zu werden braucht, da wegen der Frequenzmischung und Filterung im Demodulator 6 nur ein beschränktes Frequenzband des Signals überhaupt von Interesse ist. Im wesentlichen entspricht dieses Frequenzband dem Spektralband B, welches vom Signal $x(t)$ benutzt wird. Für ein ideales Signal besitzt das Spektralband $B$ ungefähr eine Breite von $1/T_{symb}$ und ist, je nach Modulationsverfahren, z.B. zentriert um die Trägerfrequenz $f_c$ des Trägersignals.

Generell wird also angestrebt, den Frequenzverlauf der Entzerrung innerhalb des Frequenzbands B der gewünschten Übertragungsfunktion anzugleichen, während Abweichungen ausserhalb des Frequenzbands B im wesentlichen ignoriert werden.

Um eine unten beschriebene, weitere Optimierung zu erreichen, wird der Entzerr-Frequenzverlauf $H(f)$ im Spektralband $B$ nicht gemäss Gleichung (6) der Funktion $1/H_c(f)$ angepasst, sondern einer "gewünschten Übertragungsfunktion" $D(f)$, gegeben durch

$$D(f) = \frac{e^{-j2\pi f\tau}}{H_c(f)} \tag{8}$$

Der Wert $\tau$ entspricht dabei einer Verzögerung im Zeitbereich und kann, wie unten beschrieben, zur Optimierung des Verfahrens verwendet werden.

Gemäss obigen Erläuterungen soll die Relation $H(f) = D(f)$ jedoch nur im Frequenzbereich B optimiert werden, d.h. der Wert der Fehlergrösse

$$J = T \int_B \left| H(f) - D(f) \right|^2 df \tag{9}$$

soll minimiert werden, wobei die Integration über der Frequenzbereich $B$ erfolgt.

Um den Entzerr-Frequenzverlauf $H(f)$ bzw. die entsprechenden Entzerr-Koeffizienten $h_0$ ... $h_{N-1}$ zu finden, wird vorzugsweise wie folgt vorgegangen:

Schritt 1:

Wie oben erwähnt, wird zuerst die Impulsantwort $h_c(t)$des Übertragungsmediums mit der Messrate $T$ gemessen. Dies ergibt die $L$ Impulsantwort-Koeffizienten $c_0$, $c_1$, $c_2$, ... $c_{L-1}$

Schritt 2:

Sodann wird die Kanal-Übertragungsfunktion $H_c$ gemäss Gleichung (5) bestimmt. Dies geschieht durch Fouriertransformation über $N_{FFT}$ Punkte, wobei $N_{FFT} \gg L$, z.B. $N_{FFT} = 8192$, und liefert die Werte der Kanal-Frequenzkoeffizienten

$$H_{c,k} \;=\; \sum_{n=0}^{N_{FFT}-1} c_n \,\exp\!\left(-\,\frac{j2\pi kn}{N_{FFT}}\right). \qquad (10)$$

Hierbei setzen wir $c_i = 0$ für $i \geq L$.

Schritt 3:

Aus den Kanal-Frequenzkoeffizienten $H_{c,k}$ kann der Wert der Zeitverzögerung $\tau$ ermittelt werden. Hierzu wird die inverse Fouriertransformation der Werte $1/H_{c,k}$ berechnet:

$$d_n \;=\; \frac{1}{N_{FFT}} \sum_{k=0}^{N_{FFT}-1} \frac{1}{H_{c,k}} \,\exp\!\left(\frac{j2\pi kn}{N_{FFT}}\right). \qquad (11)$$

Dies entspricht einer inversen Fouriertransformation der gewünschten Übertragungsfunktion D(f) für einen Wert von $\tau = 0$. Ein Wert $\tau \neq 0$ führt zu einer zyklischen Vertauschung der Werte $d_n$, d.h. $d_m(\tau) = d_n(\tau{=}0)$ mit $m = (n+\tau/T) \bmod N_{FFT}$.

Ein guter Wert von $\tau$ zeichnet sich dadurch aus, dass die Energie der Werte $\{d_m(\tau)\}$ für m = 0 ... N-1 maximal ist. Dabei ist $N$ die Zahl der Entzerrkoeffizienten, $N \ll N_{FFT}$, z.B: $N = 64$. Der Wert $\tau$ kann also bestimmt werden, indem die Energiewerte

$$E_i \;=\; \frac{1}{N} \sum_{n=i}^{i+N-1} \left| d_{(n \bmod NFFT)} \right|^2$$

aller möglichen Teilmengen $\{d_i \,...\, d_{(i+N-1)} \bmod N_{FFT}\}$ von $N$ aufeinander folgenden Koeffizienten $d_k$ berechnet werden und der Index t mit der grössten Energie $E_t$ gesucht wird. Sodann ist $\tau = -T \cdot t$.

Schritt 4:

Nun sind die Entzerr-Koeffizienten $h_0 \,...\, h_{N-1}$ durch Minimieren des Fehlerwerts $J$ gemäss Gleichung (9) zu bestimmen.

Ein direktes Verfahren hierzu besteht darin, dass Gleichung (4) in Gleichung (9) eingesetzt wird. Dies führt zu einem quadratischen Minimalisierungsproblem, welches mittels numerischer Verfahren gelöst werden kann. Hierbei sind $N$ lineare Gleichungen mit $N$ Unbekannten $h_0 \,...\, h_{N-1}$ zu lösen. Für kleine $N$ ist dies durchaus möglich. Für grössere $N$ von z.B. 64 wird der numerische Aufwand jedoch gross. Ausserdem kann es zu numerischen Instabilitäten aufgrund einer schlechten Konditionierung der $N{\times}N$-Matrix kommen. Deshalb wird für Schritt 4 ein anderes Vorgehen bevorzugt, welches im folgenden beschrieben wird. Dieses Vorgehen führt zwar nicht unbedingt zu einem absolut minimalen Wert des Fehlerwerts $J$, es liefert in der Praxis jedoch ausreichend gute Resultate.

Die Idee dieses Vorgehens basiert darauf, nicht direkt die Entzerr-Koeffizienten $h_0 \,...\, h_{N-1}$ zu suchen, mittels welchen der Fehlerwert $J$ minimalisiert wird, sondern deren Fourier-Koeffizienten $H_k$, die im folgenden als "Entzerr-Frequenzkoeffizienten" bezeichnet werden. Es gilt also

$$h_n \;=\; \frac{1}{N} \sum_{k=0}^{N-1} H_k e^{+j2\pi \frac{nk}{N}}. \qquad (12)$$

Wird Gleichung (12) in Gleichung (4) eingesetzt, so folgt

$$H(f) \;=\; \sum_{k=0}^{N-1} H_k S_k(f) \tag{13}$$

mit

$$S_k(f) \;=\; \frac{1}{N} \sum_{n=0}^{N-1} e^{j2\pi n(\frac{k}{n}-fT)} \;=\; \ldots \;=\; \frac{1}{N}\, \frac{1 - e^{j2\pi N(\frac{k}{N}-fT)}}{1 - e^{j2\pi(\frac{k}{N}-fT)}} \tag{14}$$

Es gilt, dass $S_k(i/NT) = \delta_{ik}$, d.h. die Werte $H_k$ entsprechen den Werten der Funktion $H(f)$ bei den Frequenzen $f = k/TN$. (Bis hier entspricht dies dem normalen "Frequency-sampling" Ansatz.)

Für die Werte $H_k$ lassen sich in einfacher Weise gute Lösungen zum Erreichen kleiner Fehlerwerte $J$ finden. Hierzu werden die Werte $H_k$ vorzugsweise in drei Gruppen unterteilt, abhängig davon, ob sie im, nahe beim oder weit weg vom Frequenzband B = $[f_1 \ldots f_2]$ liegen:

Gruppe G1:  Punkte innerhalb von B, d.h. $f_1 \leq k/NT \leq f_2$. Für diese Punkte setzen wir $H_k = D(k/NT)$.

Gruppe G2:  Punkte nahe bei, aber nicht in B. Vorzugsweise handelt es sich hier um die an B angrenzenden Punkte. Diese Punkte werden variiert, um den Fehlerwert $J$ gemäss Gleichung (9) zu minimalisieren. Die Zahl $M$ dieser Punkte kann klein gehalten werden, d.h. $M \ll N$, z.B. $M = 8$ (mit vier Punkten oberhalb und vier Punkten unterhalb von B).

Gruppe G3:  Übrige Punkte, d.h. Punkte weit weg von B. In diesem Bereich wird aus numerischen Gründen bevorzugt, dass $H(f)$ möglichst nahe bei 0 ist. Wir setzen deshalb $H_k = 0$.

Bei dieser Wahl der Werte $H_k$ wird die Zahl der Unbekannten also drastisch reduziert auf $M$. Dies erlaubt es, die Minimalisierung des Fehlerwerts $J$ mit numerisch vertretbarem Aufwand und guter Stabilität durchzuführen.

Nach der obigen Unterteilung wird Gleichung (13) zu

$$H(f) \;=\; \sum_{G1} H_k S_k(f) \;+\; \sum_{G2} H_k S_k(f), \tag{15}$$

und Einsetzen in (9) ergibt für den zu minimalisierenden Fehlerwert $J$

$$J \;=\; T \int_B \left| \sum_{G2} H_k S_k(f) - \tilde{D}(f) \right|^2 df\,, \tag{16}$$

mit

$$\tilde{D}(f) \;=\; D(f) - \sum_{G1} H_k S_k(f). \tag{17}$$

Wie am Ende der Beschreibung dargelegt wird, kann der Fehlerwert $J$ gemäss Gleichung (16) minimalisiert werden, indem ein lineares Gleichungssystem mit $M$ Gleichungen der $M$ unbekannten $H_k$ aus Gruppe G2 gelöst wird.

Schritt 5:

Aus den Entzerr-Frequenzkoeffizienten $H_k$ können nun über Gleichung (12) die gesuchten Entzerr-Koeffizienten $h_k$ berechnet werden.

Fig. 7 zeigt die so erhaltenen Entzerr-Koeffizienten $h_k$ für die Impulsantwort von Fig. 3 mit $N = 64$, B = [$f_1$ ... $f_2$] = [0.2 ... 0.4] und $\tau = 4T$. Die Gruppe 2 bestand aus vier Punkten oberhalb und vier Punkten unterhalb des Frequenzbands B. Fig. 8 zeigt den entsprechenden Entzerr-Frequenzverlauf $H(f)$, sowie die Funktion $D(f)$. Wie klar ersichtlich ist, entspricht $H(f)$ innerhalb des Frequenzbands B der gewünschten Funktion $D(f)$ sehr genau, auch zwischen den "Stützpunkten" $H_k$. Starke Abweichungen sind nahe ausserhalb des Frequenzbands B zu beobachten. Falls nötig, können diese Abweichungen mit schmalbandigen Filtern ausgefiltert werden.

Wie bereits erwähnt, führt die Einteilung der Entzerr-Frequenzkoeffizienten $H_k$ in die oben genannten drei Gruppen nicht zu einer optimalen Lösung, d.h. dem absoluten Minimum des Fehlerwerts $J$. Dennoch handelt es sich um eine gute Minimalisierung dieses Werts, die mit vergleichsweise kleinem Rechenaufwand zu sehr brauchbaren Resultaten führt.

Das oben beschriebene Verfahren kann in verschiedener Weise verallgemeinert oder abgewandelt werden. Gleichung (8) kann z.B. generalisiert werden zu

$$D(f) = \frac{g}{H_c(f)} \qquad mit \qquad g = g' \cdot e^{-j2\pi f\tau}, \qquad\qquad (8')$$

wobei g und g' komplexe bzw. reelle Konstanten sind. Die Einführung einer Multiplikation mit g' entspricht lediglich einer Skalierung des entzerrten Signals.

Gemäss Gleichung (9) wird die Fehlergrösse aus dem Quadrat des Betrags der Abweichung zwischen $H(f)$ und $D(f)$ berechnet, was in einer Umgebung mit Gauss'schem Rauschen ein vernünftiger Ansatz ist. Andere Definitionen der Fehlergrösse $J$ sind jedoch denkbar. Generell sollte die Fehlergrösse $J$ so definiert werden, dass sie mit zunehmender Angleichung von $H(f)$ und $D(f)$ im Frequenzband $B$ kleiner wird, während Abweichungen deutlich ausserhalb des Frequenzbands $B$ keinen Einfluss auf J haben. Beispielsweise kann eine Definition folgender Art verwendet werden:

$$J = R \int \rho(f)F(H(f), D(f))df, \qquad\qquad (9')$$

wobei $\rho(f)$ eine Frequenzgewichtungs-Funktion, $F$ ein Mass für die Abweichung von $H$ und $D$, und $R$ eine Normierungskonstante ist. $\rho(f)$ ist ausserhalb des Frequenzbands B im wesentlichen 0 und kann z.B. eine Rechteckfunktion über $B$ sein (wie in Gleichung (9), oben), oder z.B. auch eine Gaussfunktion zentriert um die Trägerfrequenz $f_c$ mit Breite $1/T_{symb}$. $F$ kann dem Quadrat der absoluten Differenz zwischen $H(f)$ und $D(f)$ entsprechen (wie in Gleichung (9), oben), oder z.B. auch einer anderen Potenz dieser absoluten Differenz. $R$ wird in Gleichung (9) gleich dem Abtastintervall $T$ gesetzt: In diesem Falle ist, falls $B$ die Bandbreite $T$ besitzt, die Fehlergrösse $J$ gleich der Fehlerenergie im Zeitbereich.

Zu Minimalisierung des Fehlerwerts $J$:

Wie oben erwähnt, kann Gleichung (16) minimalisiert werden, indem ein lineares Gleichungssystem mit $M$ Gleichungen der $M$ unbekannten $H_k$ aus Gruppe G2 gelöst wird. Dies wird im folgenden erläutert.

Gleichung (15) kann wie folgt umgewandelt werden:

$$J / T = \sum_k \sum_l H_k^* \int_B S_k^*(f)S_l(f)df\, H_l$$

$$- \sum_k H_k^* \int_B S_k^*(f)\tilde{D}(f)df \qquad\qquad (A1)$$

$$- \sum_l H_l \int_B \tilde{D}^*(f)S_l(f)df + \int_B \left|\tilde{D}^2(f)\right|df$$

was geschrieben werden kann als

$$J = \underline{H}^+ P \underline{H} - \underline{H}^+ \underline{D} - \underline{D}^+ \underline{H} + d, \qquad\qquad (A2)$$

wobei $\underline{H}$ der komplexe Vektor der $H_k$ aus Gruppe 2 ist, und P eine quadratische nicht-negative definite Hermite' sche Matrix mit den Elementen

$$P_{kl} = T \int_B S_k^*(f) S_l(f) df \;,\qquad\qquad (A3)$$

und D ein komplexer Vektor mit den Elementen

$$D_k = T \int_B S_k^*(f) \tilde{D}(f) df \;.\qquad\qquad (A4)$$

Die Minimalisierung der quadratischen Form (A2) nach Vektor $\underline{H}$ ist ein Standardproblem, welches durch Ergänzen der Quadrate gelöst werden kann. Daraus folgt, dass durch Lösung der Gleichung

$$P\underline{H} = \underline{D}\qquad\qquad (A5)$$

nach $\underline{H}$ das Optimum für $\underline{H}$ gefunden werden kann.

Der direkteste Weg zum Erhalt der Parameter $P_{kl}$ und $D_k$ ist die numerische Integration. Hierzu sind $S_k(f)$ und $\tilde{D}(f)$ mittels FFT über $N_{FFT}$ Punkte zu berechnen, die resultierenden Vektoren elementweise zu multiplizieren und über den Bereich, der der Bandbreite B entspricht, zu summieren. Dies wurde für die in der Figuren gezeigten Beispiele durchgeführt.

Wenn die Signale im Zeitbereich reellwertig sind, werden die Fouriertransformierten symmetrisch um $f = 0$ (bzw. symmetrisch um $f = 1/T$, d.h. um die Messrate). Wenn B nominell zwischen $f_1$ und $f_2$ liegt, sollte der Integrationsbereich also gewählt werden als B = $[-f_2 \ldots -f_1] \cup [f_1 \ldots f_2]$. Für reellwertige $\{h_k\}$ muss gelten: $H_{-k} = H_{N-k} = H_k^*$. Somit muss $M$ also über einen symmetrischen Bereich gewählt werden.

Bezugszeichenliste

1: Sender
2: Empfänger
3: Übertragungsmedium
4: Analog-Digital-Wandler
5: Entzerrstufe
6: Demodulator
7a, 7b: Tiefpass
8: Synchronisationsschaltung
9: Bit-Detektor
B: Frequenzband
$c_0$, $c_1$, $c_2$, ... $c_{L-1}$: Impulsantwort-Koeffizienten
$D(f)$: gewünschte Übertragungsfunktion
$d_i$: inverse Fourierkoeffizienten von $D(f)$
$\underline{D}$, $D_k$: siehe Gleichung (A4)
$f_c$: Frequenz des Trägersignals
$f_1$, $f_2$: Grenzen des Frequenzbands B
F: Gewichtungsfunktion für Abweichung
$g$, $g'$: multiplikative Konstanten
$H(f)$: Entzerr-Frequenzverlauf
$\underline{H}$, $H_k$: Entzerr-Frequenzkoeffizienten
$h_0$ ... $h_{N-1}$: Entzerr-Koeffizienten
$h_c(t)$: Impulsantwort
$H_c(f)$: Übertragungsfunktion

$H_{c,k}$: Kanal-Frequenzkoeffizienten

$J$: Fehlerwert

$L$: Zahl der Impulsantwort-Koeffizienten

$M$: Zahl der Punkte im Frequenzband B

$N$: Zahl der Entzerr-Koeffizienten

$N_{FFT}$: Zahl der Punkte einer quasi-diskreten Fouriertransformation

$n(t)$: additives Rauschen

$P_{kl}$: siehe Gleichung (A3)

$S_k$: Siehe Gleichung (14)

$T_{symb}$: Bit- bzw. Symbolweite

$t$: Zeit

$x, x(t)$: Signal des Senders

$y, y(t), y_i$: Signal beim Empfänger

$z_i$: entzerrtes Signal

$\delta_{ik}$: gleich 1 für $i=k$, sonst 0

$\rho(f)$: Frequenzgewichtungs-Funktion

$\tau$: Zeitverzögerung

**Patentansprüche**

1. Verfahren zum Entzerren und Demodulieren eines über ein Übertragungsmedium (3) übertragenen Signals ($y$), wobei das übertragene Signal ($y$) ein Frequenzband B nutzt, umfassend folgende Schritte:

    (a) Bestimmen einer diskretisierten Impulsantwort $c_1$, $c_2$, ... $c_L$ des Übertragungsmediums (3)
    (b) Digitalisieren des übertragenen Signals ($y$),
    (c) Entzerren des übertragenen Signals ($y$) zum Erzeugen eines entzerrten Signals ($z$),
    (d) Filtern des entzerrten Signals ($z$) zur Unterdrückung von Frequenzkomponenten ausserhalb des Frequenzbands B und Demodulation zur Erzeugung eines Ausgangssignals,

    dadurch gekennzeichnet, dass die Entzerrung die folgenden Schritte umfasst:

    (c1) Bestimmen einer Fouriertransformierten $H_C(f)$ der Impulsantwort und einer gewünschten Übertragungsfunktion $D(f)$ gemäss

$$D(f) = \frac{g}{H_c(f)},$$

    wobei $g$ eine komplexe Konstante ist,
    (c2) Bestimmen eines Entzerr-Frequenzverlaufs $H(f)$ derart, dass dieser innerhalb des Frequenzbands B der gewünschten Übertragungsfunktion $D(f)$ angeglichen wird, wobei Abweichungen zwischen dem Entzerr-Frequenzverlaufs $H(f)$ und der gewünschten Übertragungsfunktion $D(f)$ ausserhalb des Frequenzbands B beim Bestimmen des Entzerr-Frequenzverlaufs $H(f)$ im wesentlichen ignoriert werden, und
    (c3) Entzerren des übertragenen Signals ($y$) mit dem Entzerr-Frequenzverlauf $H(f)$.

2. Verfahren nach Anspruch 1, dadurch gekennzeichnet, dass in Schritt (c2) ein Fehlerwert $J$ gemäss

$$J = R\int \rho(f)F(H(f), D(f))df$$

    minimiert wird, wobei $\rho(f)$ eine Frequenzgewichtungs-Funktion ist, welche ausserhalb des Frequenzbands B im wesentlichen 0 ist, $F$ ein Mass für die Abweichung von $H$ und $D$ ist, und R eine Konstante ist.

3. Verfahren nach Anspruch 2, dadurch gekennzeichnet, dass die Frequenzgewichtungs-Funktion $\rho(f)$ eine Rechteckfunktion über das Frequenzband B ist.

4. Verfahren nach einem der Ansprüche 2 oder 3, dadurch gekennzeichnet, dass

$$F(H(f), D(f)) = |H(f) - D(f)|^2,$$

und insbesondere dass

$$J = R \int_B |H(f) - D(f)|^2 df$$

**5.** Verfahren nach einem der vorangehenden Ansprüche, dadurch gekennzeichnet, dass zum Entzerren die Operation

$$z_i = \sum_{k=0}^{N-1} y_{i-k} h_k$$

durchgeführt wird, wobei $y_i$ diskretisierte, mit einer Messrate $1/T$ gemessene Werte des übertragenen Signals ($y$), $z_i$ diskretisierte Werte des entzerrten Signals *(z)* und $h_0 ... h_{N-1}$ Entzerr-Koeffizienten sind, wobei der Entzerr-Frequenzverlauf $H(f)$ gegeben ist durch

$$H(f) = \sum_{n=0}^{N-1} h_n e^{-j2\pi f n T},$$

und dass die Entzerr-Koeffizienten $h_k$ variiert werden, um im Frequenzband B den Entzerr-Frequenzverlauf $H(f)$ an die gewünschte Übertragungsfunktion $D(f)$ anzugleichen.

**6.** Verfahren nach Anspruch 5, dadurch gekennzeichnet, dass die Entzerr-Koeffizienten $h_k$ aus Entzerr-Frequenzkoeffizienten $H_k$ berechnet werden gemäss

$$h_n = \frac{1}{N} \sum_{k=0}^{N-1} H_k e^{+j2\pi \frac{nk}{N}},$$

wobei jeder Entzerr-Frequenzkoeffizient $H_k$ einer Frequenz $k/NT$ zugeordnet ist, und dass Entzerr-Frequenzkoeffizienten $H_k$, die dem Frequenzband B zugeordnet sind, der gewünschten Übertragungsfunktion $D(k/NT)$ gleichgesetzt werden.

**7.** Verfahren nach Anspruch 6, dadurch gekennzeichnet, dass die Entzerr-Frequenzkoeffizienten $H_k$ in drei Gruppen aufgeteilt werden, wobei eine erste Gruppe (G1) die Entzerr-Frequenzkoeffizienten $H_k$ innerhalb des Frequenzbands B, die zweite Gruppe (G2) eine Zahl M von Entzerr-Frequenzkoeffizienten $H_k$ angrenzend an das Frequenzband B und eine dritte Gruppe (G3) alle übrigen Entzerr-Frequenzkoeffizienten $H_k$ umfasst, wobei für die erste Gruppe $H_k = D(k/NT)$ und die dritte Gruppe $H_k = 0$ gewählt wird, während die Entzerr-Frequenzkoeffizienten $H_k$ der zweiten Gruppe variiert werden, um im Frequenzband B den Entzerr-Frequenzverlauf $H(f)$ an die gewünschte Übertragungsfunktion $D(f)$ anzupassen.

**8.** Verfahren nach einem der vorangehenden Ansprüche, dadurch gekennzeichnet, dass die Fouriertransformierte $H_c(f)$ berechnet wird aus

$$H_c(f) = \sum_{n=0}^{N_{FFT}} c_n e^{-j2\pi f n T}$$

wobei $N_{FFT} \gg N$ und $c_n = 0$ für $n > L$.

**9.** Verfahren nach einem der vorangehenden Ansprüche, dadurch gekennzeichnet, dass die komplexe Konstante $g$ gegeben ist durch

$$g = g' \cdot e^{-j2\pi f\tau},$$

wobei g' eine reelle Konstante und $\tau$ eine durch folgende Schritte gewählte Zeitkonstante ist:

Berechnen von inversen Fourierkoeffizienten $d_n$ der gewünschten Übertragungsfunktion $D(f)$ aus

$$d_n \;=\; \frac{1}{N_{FFT}} \sum_{k=0}^{N_{FFT}-1} \frac{1}{H_{c,k}} \exp\!\left(\frac{j2\pi kn}{N_{FFT}}\right),$$

wobei $H_{c,k} = H_c(k/NT)$,
Finden eines grössten Energiewerts $E_i$, wobei der Energiewert $E_i$ definiert als Energiewert der Teilmenge $\{d_i \ldots d_{(i+N-1)\bmod N_{FFT}}\}$, und
Berechnen von $\tau = - T \cdot i$.

Fig. 1

Fig. 2

Fig. 3

Fig. 4

hk

Fig. 5

Fig. 6

hk

Fig. 7

Fig. 8

**Europäisches Patentamt**

## EUROPÄISCHER RECHERCHENBERICHT

Nummer der Anmeldung

EP 00 81 0126

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 3 864 632 A (CHANG TIEN-LIN)<br>4. Februar 1975 (1975-02-04)<br>* Zusammenfassung *<br>* Spalte 3, Zeile 24 - Zeile 62 *<br>* Spalte 10, Zeile 30 - Spalte 11, Zeile 21 *<br>* Abbildungen 1,7,9,10 * | 1-9 | H04L25/03 |
| A | EP 0 800 288 A (LUCENT TECHNOLOGIES INC)<br>8. Oktober 1997 (1997-10-08)<br>* Zusammenfassung *<br>* Seite 13, Zeile 1 - Zeile 49 *<br>* Seite 14, Zeile 5 - Zeile 11 *<br>* Ansprüche 1-18 *<br>* Abbildungen 14,16 * | 1 | |
| A | EP 0 768 778 A (ALCATEL BELL NV)<br>16. April 1997 (1997-04-16)<br>* Zusammenfassung *<br>* Seite 1, Zeile 38 - Seite 2, Zeile 25 * | 1 | |

RECHERCHIERTE SACHGEBIETE (Int.Cl.7)

H04L

Der vorliegende Recherchenbericht wurde für alle Patentansprüche erstellt

| Recherchenort | Abschlußdatum der Recherche | Prüfer |
|---|---|---|
| DEN HAAG | 7. Juli 2000 | Langinieux, F |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**　　EP 00 81 0126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2000

| Im Recherchenbericht angeführtes Patentdokument | Datum der Veröffentlichung | Mitglied(er) der Patentfamilie | Datum der Veröffentlichung |
|---|---|---|---|
| US 3864632 A | 04-02-1975 | KEINE | |
| EP 0800288 A | 08-10-1997 | US 5822368 A<br>CA 2199761 A<br>CN 1167383 A<br>JP 10041916 A | 13-10-1998<br>04-10-1997<br>10-12-1997<br>13-02-1998 |
| EP 0768778 A | 16-04-1997 | AU 705465 B<br>AU 6813696 A<br>CA 2187660 A<br>NZ 299431 A<br>US 5870432 A | 20-05-1999<br>17-04-1997<br>12-04-1997<br>26-05-1997<br>09-02-1999 |

EPO FORM P0461

Für nähere Einzelheiten zu diesem Anhang : siehe Amtsblatt des Europäischen Patentamts, Nr.12/82